# EUROPÄISCHE PATENTSCHRIFT

(11) **EP 1 681 249 B1**
(45) Veröffentlichungstag und Bekanntmachung des Hinweises auf die Patenterteilung: **09.07.2008**
(21) Anmeldenummer: 05028623.6
(22) Anmeldetag: 29.12.2005
(51) Int. Cl.: B65G 47/68, B65G 47/51

(54) **Transportstrecke zum Transportieren von Flaschen oder dergleichen Behälter**
Conveyor-way for bottles or similar containers
Trajet de transport pour bouteilles ou conteneurs similaires

(30) Priorität: 12.01.2005 DE 102005001376
(43) Veröffentlichungstag der Anmeldung: 19.07.2006
(73) Patentinhaber: KHS AG, 44143 Dortmund (DE)
(72) Erfinder: Scholz, Ulrich, 59348 Lüdinghausen (DE); Mundt, Georg, 59174 Kamen (DE)

(56) Entgegenhaltungen:
- DE-U1- 9 204 040
- US-A1- 2003 079 960
- US-B1- 6 612 425
- US-B1- 6 648 124

## Beschreibung

Die Erfindung bezieht sich auf eine Transportstrecke zum Transportieren von Flaschen oder dergleichen Behälter mit einem Puffer oder Pufferspeicher. Eine derartige Transportstrecke ist Gegenstand der WO 03/035515, oder z.B. der US 6 648 124.

Aufgabe der Erfindung ist es, eine Transportstrecke aufzuzeigen, bei der die Flaschen oder Behälter beispielsweise im Störungsfall in einer der Transportstrecke bzw. dem Behälterauslauf dieser Transportstrecke nachfolgenden Maschine mit hoher Betriebssicherheit in den Puffer oder Pufferspeicher aufgenommen werden können.

Zur Lösung dieser Aufgabe ist eine Transportstrecke entsprechend dem Patentanspruch 1 ausgebildet.

Weiterbildungen sind Gegenstand der Unteransprüche.

Die Erfindung wird im Folgenden anhand der Figuren an einem Ausführungsbeispiel näher erläutert. Es zeigen:

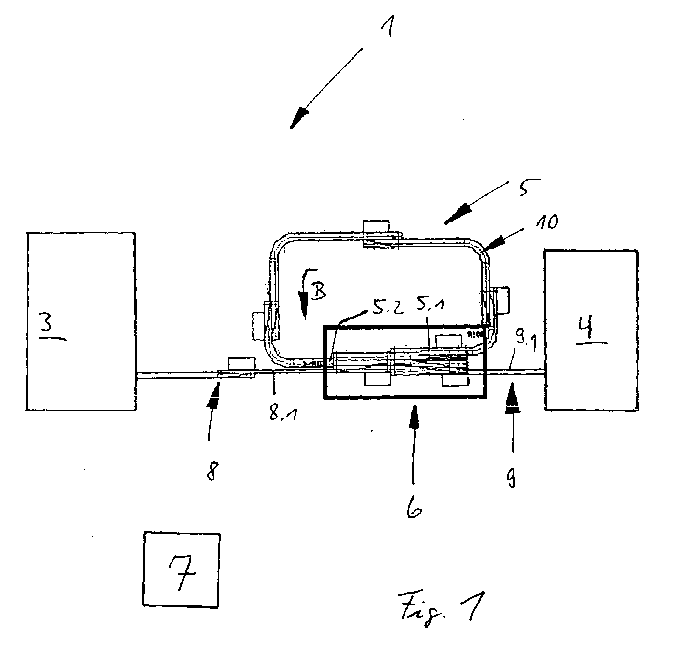

- Fig. 1: in vereinfachter Darstellung und in Draufsicht eine Transportstrecke für Flaschen oder dergleichen Behälter zwischen einer Rinser-Füller-Verschließer-Kombination oder -einheit und einer Etikettiermaschine, zusammen mit einem an dieser Transportstrecke gebildeten Puffer und einer Übergabestation zwischen der Transportstrecke und dem Puffer;
- Fig. 2 - 5: jeweils in schematischer Darstellung und in Draufsicht die Übergabestation in unterschiedlichen Betriebszuständen;
- Fig. 6: in schematischer Teildarstellung und in Draufsicht die Übergabestation im Bereich eines als "Splitter" dienenden Abschnittes der Behälterführung bei einer abgewandelten Ausführungsform.

In den Figuren ist 1 eine Transportstrecke zum Transportieren von Flaschen 2 oder dergleichen Behälter von einer Rinser-Füller-Verschließer-Einheit 3, in der die Flaschen 2 sterilisiert, mit einem flüssigen Füllgut gefüllt und verschlossen werden, an eine in einer Haupt-Transportrichtung A folgende Etikettiermaschine 4, in der die gefüllten und verschlossenen Flaschen 2 in der üblichen Weise etikettiert werden.

Die Transportstrecke 1 weist einen Pufferspeicher oder Puffer 5 zur Aufnahme einer bestimmten Anzahl an Flaschen 2 auf, beispielsweise bei einer Betriebsstörung der Etikettiermaschine 4 oder zum Ausgleich von Leistungsschwankungen der Einheit 3 und/oder der Etikettiermaschine 4. Die Kapazität des Puffers 5, d.h. die maximale Anzahl der in dem Puffer 5 aufgenommenen Flaschen 2 ist beispielsweise annähernd gleich der Anzahl der maximal in der Einheit 3 aufgenommenen Flaschen 2.

Wie nachstehend noch näher beschrieben, werden die Flaschen 2 bei einem normalen Betrieb der aus der Transportstrecke 1, der Einheit 3 und der Etikettiermaschine 4 bestehenden Anlage über die Transportstrecke 1, aber unter Umgehung des Puffers 5 direkt von der Einheit 3 an die Etikettierstation 4 geleitet.

Bei einer Störung der Etikettiermaschine 4 wird der Einlauf der Flaschen 2 in die Einheit 3 gestoppt und sämtliche Flaschen 2 werden dann aus der leerlaufenden Einheit 3 vom Puffer 5 aufgenommen. Bei einem Wiederanlaufen der Anlage werden zunächst Flaschen 2 aus dem Puffer 5 an die Etikettiermaschine 4 geleitet, bevor dieser weitere Flachen direkt von der Einheit 3 zugeführt werden. Auch andere Betriebsweisen der Anlage sind denkbar, beispielsweise in der Form, dass bei einer ausreichenden Kapazität des Puffer 5 stets ein gewisser Anteil an Flaschen 2 in den Puffer 5 geleitet und aus diesem entnommen wird, so dass sich dort jeweils ein Vorrat an Flaschen 2 befindet, die dann bei einer Erhöhung der Leistung der Etikettiermaschine 4 in den an die Etikettiermaschine geleiteten Flaschenstrom eingeschleust werden können, so dass Leistungsschwankungen oder -unterschiede zwischen der Einheit 3 und der Etikettiermaschine 4 ausgeglichen werden.

Für das Einbringen und Ausbringen der Flaschen 2 in den bzw. aus dem Puffer 5 dient eine Übergabestation 6, die über eine zentrale Steuereinrichtung oder einen zentralen Rechner 7 z.B. in Abhängigkeit von der Leistung der Einheit 3 und/oder der Etikettiermaschine 4 und/oder des Flaschenstromes am Auslauf der Einheit 3 und/oder am Einlauf der Etike ttiermaschine 4 gesteuert wird.

Im Einzelnen besteht die Transportstrecke 1 aus einem Transporteur 8, der die Einheit 3 mit der Übergabestation 6 verbindet und somit einen Behältereinlauf dieser Station bildet, sowie aus einem Transporteur 9, der die Übergabestation 6 mit der Etikettiermaschine 4 verbindet und somit einen Behälterauslauf dieser Station bildet. Beide Transporteure 8 und 9 sind jeweils von einem endlos umlaufend angetriebenen Transportband 8.1 bzw. 9.1 (z.B. Scharnierbandkette) und von seitlichen Führungsgeländern gebildet und so ausgeführt, dass die mit ihrem Boden auf den Transportbändern 8.1 bzw. 9.1 aufstehenden und mit ihren Achsen in vertikaler Richtung orientierten Flaschen 2 auf den Transporteuren 8 und 9 jeweils einen einspurigen Flaschenstrom ausbilden, in welchem die Flaschen 2 in der Transportrichtung A möglicht dicht aneinander anschließen.

Der Puffer 5 besteht ebenfalls im Wesentlichen aus einem Hilfstransporteur 10, auf dem die im Puffer befindlichen Flaschen 2 in einer Förderrichtung B bewegt werden und der aus mehreren, in dieser Förderrichtung B aneinander anschließenden Transportbändern (z.B. Scharnierbandketten) sowie aus seitlichen Führungen besteht. Weiterhin ist der Hilfstransporteur 10 so ausgebildet, dass die im Puffer 5 aufgenommenen, dort mit ihren Boden auf den Transportbändern aufstehenden und mit ihrer Achse in vertikaler Richtung orientierten Flaschen 2 einen zweispurigen Flaschenstrom bilden. Die Transportflächen der Transporteure 8, 9 und 10, auf denen (Transportflächen) die Flaschen 2 mit ihren Boden aufstehen, sowie auch eine nachstehend noch näher beschriebene Transportfläche 11 der Übergabestation 6 liegen in einer gemeinsamen horizontalen Ebene.

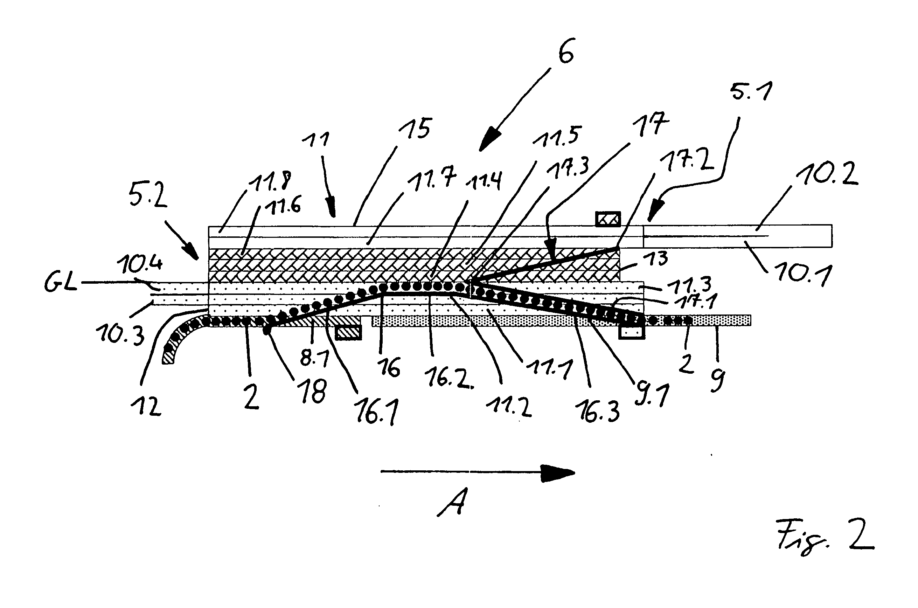

Die Figuren 2 - 5 zeigen die Übergabestation 6 näher im Detail. Die Transportbänder 8.1 und 9.1 der beiden Transporteure 8 und 9 sind im Bereich der Übergabestation 6 so angeordnet, dass das dort geradlinige Ende des Transportbandes 8.1 des Transporteurs 8 und der ebenfalls geradlinige Anfang des Transportbandes 9.1 des Transporteurs 9 achsgleich zueinander und in der Transportrichtung A mit einem gewissen Abstand aufeinander folgend vorgesehen sind. An die Längsseiten der Transportbänder 8.1 und 9.1 schließt die Transportfläche 11 an, die von mehreren endlos umlaufend angetriebenen und aneinander anschließenden Transportbändern 11.1 - 11.8 gebildet ist, die mit ihrer Längserstreckung parallel zueinander, parallel zur Längserstreckung der Transportbänder 8.1 und 9.1 und in Transportrichtung A orientiert sind. Die Transportbänder 11.1 - 11.8 sind beispielsweise wiederum Scharnierbandketten.

Bei der dargestellten Ausführungsform ist die Transportfläche 11 von insgesamt acht Transportbändern 11.1 - 11.8 gebildet, die seitlich von den Transportbändern 8.1 und 9.1 vorgesehen sind, und zwar in der Weise, dass das Transportband 11.1 den beiden Transportbänder 8.1 und 9.1 unmittelbar benachbart liegt und die Transportbänder 11.2 - 11.8 mit steigendem Index jeweils einen zunehmenden Abschnitt von den Transportbändern 8.1 und 9.1 aufweisen, jedoch ebenfalls jeweils an das benachbarte Transportband 11.1 - 11.8 unmittelbar anschließen. Die Transportbänder 11.1 - 11.8 sind so angetrieben, dass auch die Transportfläche 11 die Transportrichtung A aufweist. Die Transportfläche 11 bildet bezogen auf die Transportrichtung A ein vorderes Ende 12, ein rückwärtiges Ende 13 sowie zwei jeweils in Transportrichtung verlaufende Längsseiten 14 und 15, von denen die Längsseite 14 den Transportbändern 8.1 und 9.1 benachbart ist.

An das Ende 13 schließen in der Nähe der Längsseite 15 zwei Transportbänder 10.1 und 10.2 des Hilfstransporteurs 10 an, die den Puffereinlauf 5.1 bilden und so angetrieben sind, dass die Förderrichtung B am Puffereinlauf 5.1 identisch mit der allgemeinen Transportrichtung A ist. Mit dem Pufferauslauf 5.2 bzw. mit den diesen Auslauf bildenden Transportbändern 10.3 und 10.4 schließt der Puffer 5 an das vordere Ende 12 der Transportfläche 11 an, und zwar bei der dargestellten Ausführungsform zwischen den beiden Längsseiten 14 und 15 derart, dass das Transportband 10.3 an das Transportband 11.2 und das Transportband 10.4 an das Transportband 11.3 anschließt.

Über der Ebene der Transportfläche 11 sind zwei Führungen 16 und 17 für die Flaschen 2 vorgesehen. Die Führung 16 besteht bei der dargestellten Ausführungsform im Wesentlichen aus drei Abschnitten 16.1, 16.2 und 16.3, die in dieser Reihenfolge in der Transportrichtung A aneinander anschließen. Mit dem Abschnitt 16.1, der schräg zur Transportrichtung A verläuft und mit dieser einen spitzen Winkel einschließt, der sich zu dem Ende 13 hin öffnet, werden die über den Transporteur 8 zugeführten Flaschen 2 von dem Transportband 8.1 seitlich auf die Transportfläche 11 geleitet, so dass die Flaschen 2 dann unter Beibehaltung der allgemeinen Transportrichtung A in der nachstehend noch beschriebenen Weise durch Steuerung des als Überleitelement dienenden Abschnitts 16.1 entweder nur auf den von den Transportbändern 11.1 - 11.3 gebildeten Teil der Transportfläche 11 gelangen, und zwar zur Weiterleitung an den Transporteur 9, oder aber auf den von den Transportbändern 11.4 - 11.8 gebildeten Teil der Transportfläche 11, und zwar zur Weiterleitung an den Puffereilauf 5.1.

Der Abschnitt 16.2 der Führung 16 verläuft parallel zur allgemeinen Transportrichtung A, und zwar mit Abstand von beiden Längsseiten 14 und 15 und an der der Längsseite 14 zugewandten Seite des Transportbandes 11.3. Der Abschnitt 16.3 verläuft wieder schräg zur Transportrichtung A, und zwar derart, dass dieser Abschnitt mit der Transportrichtung A einen spitzen Winkel einschließt, der sich entgegen der Transportrichtung, d.h. zum vorderen Ende 12 hin öffnet. Der Abschnitt 16.3 geht dann in eine nicht dargestellte seitliche Führung des Transporteurs 9 übergeht, die (Führung) an der dem Puffer 5 abgewandten Seite dieses Transporteurs vorgesehen ist.

Die Führung 17 besteht im Wesentlichen aus zwei Abschnitten 17.1 und 17.2, von denen der Abschnitt 17.1 ausgehend von einem Frontbereich 17.3, an dem beide Abschnitte 17.1 und 17.2 der Führung 17 ineinander übergehen, in eine nicht dargestellte seitliche Führung des Transporteurs 9 übergeht und parallel zum Abschnitt 16.3 verläuft, und zwar mit einem Abstand, der gleich oder etwas größer ist als der Durchmesser der Flaschen 2, so dass sich zwischen dem Abschnitt 16.3 und 17.2 auf der Transportfläche 11 ein Transportweg ergibt, auf dem sich ein einspuriger Flaschenstrom ausbilden kann, der dann vom Transporteur 9 übernommen wird.

Der Abschnitt 17.2 verläuft ausgehend von dem Frontbereich 17.3 ebenfalls schräg zur Transportrichtung A und endet an einem nicht dargestellten seitlichen Führungsgeländer des Hilfstransporteurs 10. Die beiden Anschnitte 17.1 und 17.2 der Führung 17 divergieren derart, dass ihr gegenseitiger Abstand mit zunehmendem Abstand vom Frontbereich 17.3 ebenfalls zunimmt und sie einen spitzen Winkel mit einander einschließen, der sich zu dem Ende 13 hin öffnet.

Durch den Frontbereich 17.3, der bezogen auf die allgemeine Transportrichtung A das vordere exponierte Ende sowohl des Abschnittes 17.1 als auch des Abschnittes 17.2 bildet sowie durch den beschriebenen schrägen Verlauf dieser Abschnitte ist die Führung 17 im Wesentlichen keilförmig ausgeführt und wirkt, wie nachstehend noch beschrieben wird, als Trennelement bzw. Splitter, um den Flaschenstrom z.B. im normalen Betrieb von dem Transporteur 8 direkt an den Transporteur 9 zu führen oder aber beispielsweise bei einer Betriebsstörung der Etikettiermaschine 4 in den Puffer 5 zu leiten.

Der Frontbereich 17.3 bzw. die von diesem gebildete Spitze der keilförmigen Führung 17 liegt auf einer gedachten, parallel zur Transportrichtung A verlaufenden horizontalen Grenzlinie GL, die von dem Abschnitt 16.2 der Führung 16 einen Abstand aufweist, der gleich oder etwas größer ist als der Durchmesser der Flaschen 2. Bei der dargestellten Ausführungsform befindet sich der Frontbereich 17.3 an der der Längsseite 14 abgewandten Längsseite des Transportbandes 11.3. Wie aus den Figuren 2-5 auch ersichtlich ist, schließen ebenso wie der Transporteur 8 auch der Pufferauslauf 5.2 bzw. die diesen Auslauf bildenden Transportbänder 10.3 und 10.4 an der der Längsseite 14 zugewandten Seite der Grenzlinie GL an die Transportfläche 11 an. Ebenso befinden sich die Abschnitte 16.2, 16.3 und 17.1 auf der der Längsseite 14 zugewandten Seite der Grenzlinie GL, die zwischen den Transportbändern 11.3 und 11.4 verläuft.

Der Abschnitt 16.1 schließt mit seinem bezogen auf Transportrichtung A vorderen Ende an eine nicht dargestellte seitliche Führung des Transporteurs 8 an und ist dort mittels eines Gelenks 18 um eine vertikale Achse schwenkbar gehalten, so dass dieser Abschnitt 16.1 mit einem motorischen Stellglied 19, z.B. mit einem Pneumatik-Zylinder aus der in den Figuren 2, 4 und 5 dargestellten Normal- oder Ausgangsstellung, in der der Abschnitt 16.1 mit seinem in Transportrichtung A rückwärtigen Ende an den Abschnitt 16.2 anschließt und sich der Abschnitt 16.1 vollständig auf der der Längsseite 14 zugewandten Seite der Grenzlinie GL befindet, in eine aktivierte Stellung bzw. Überleitstellung schwenkbar ist, in der der Abschnitt 16.1 die Grenzlinie GL schneidet und das in Transportrichtung A rückwärtigen Ende des Abschnittes 16.2 sich am Übergang zwischen den Transportbändern 11.4 und 11.5 befindet bzw. einen Abstand von der Längsseite 14 aufweist, der gleich oder größer ist als der Abstand, den die Grenzlinie GL von dieser Längsseite besitzt. In dieser aktivierte Stellung des Abschnitts 16.1 werden die über den Transporteur 8 zugeführten Flaschen 2 auf das Transportband 11.4 und/oder 11.5, d.h. auf einen Teil der Förderfläche 11 übergleitet, der dem Abschnitt 17.2 der Führung 17 zugeordnet ist, so dass die betreffenden Flaschen 2 dann nach dem Auftreffen auf den Abschnitt 17.2 entlang dieses Abschnitts an den Einlauf 5.1 des Puffers 1 gefördert werden.

Die grundsätzliche Arbeitsweise der Übergabestation lässt sich anhand der Figuren 2 - 5 beschreiben. Die Figur 2 zeigt, wie erwähnt, den Zustand der Übergabestation 6 im normalen, störungsfreien Betrieb. Der Abschnitt 16.1 der Führung 16 befindet sich in seiner Normalstellung, d.h. dieser Abschnitt schließt mit seinem Ende an den Abschnitt 16.2 an und befindet sich vollständig auf der der Längsseite 14 zugewandten Seite der Grenzlinie GL mit einem Abstand von dieser Linie, der gleich oder geringfügig größer ist als der Durchmesser der Flaschen 2. Die Flaschen 2 verbleiben beim Transport auf der der Längsseite 14 zugewandten Seite der Grenzlinie GL bzw. auf dem von den Transportbändern 11.1 - 11.3 gebildeten und dem Abschnitt 17.1 zugeordneten Teil der Transportfläche 11. Der über den Transporteur 8 angeförderte Flaschenstrom wird in diesem Betriebszustand über die Übergabestation 6 direkt, d.h. unter Umgehung des Puffers 5 und entlang der Führung 16 an den Transporteur 9 weitergeleitet.

Eventuelle im Puffer 5 befindliche Flaschen 2, die am Pufferauslauf 5.2 auf die Transportfläche 11 gelangen und in Lücken des über den Transporteur 8 zugeführten Flaschenstroms keinen Platz finden, werden von dem an der Führung 16 geführten Flaschenstrom seitlich auf die Transportbänder 11.4 - 11.8 verdrängt und gelangen somit wieder an den Puffereinlauf 5.1.

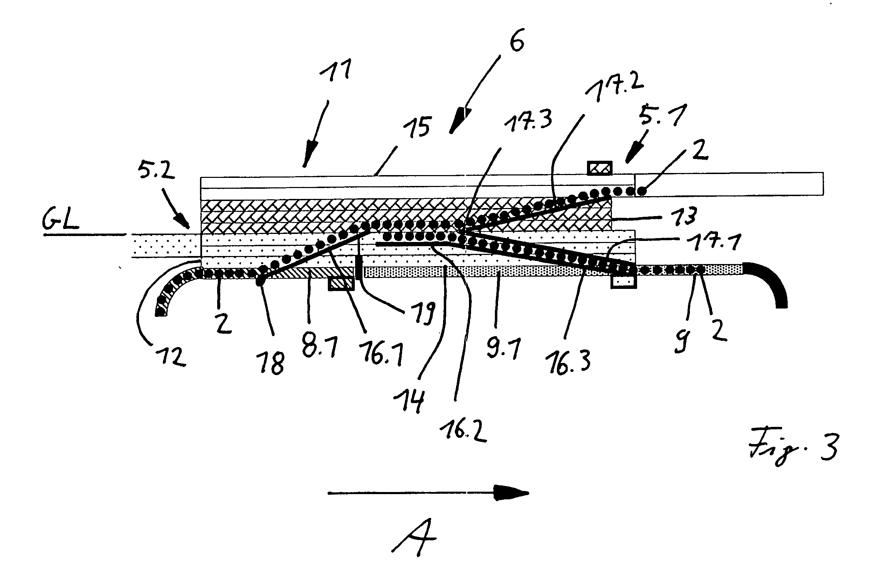

Die Figur 3 zeigt den Zustand der Übergabestation 6 nach dem Auftreten einer Störung der Etikettiermaschine 4. Über die Steuerung 7 wird eine Aktivierung des Stellgliedes 19 bewirkt, so dass der Abschnitt 16.1 aus der Ausgangsstellung in die Überleitstellung geschwenkt wird, sich das Ende des Abschnittes 16.1 also auf der Grenzlinie GL oder sogar auf der der Längsseite 14 abgewandten Seite dieser Grenzlinie L befindet, so dass sämtliche über den Transporteur 8 zugeführte Flaschen 2 nunmehr entlang des Abschnittes 16.1 auf die Transportbänder 11.4 und/oder 11.5 gelangen und somit entlang des Abschnittes 17.2 der Führung 17 an den Puffereinlauf 5.1 geleitet werden, und zwar solange, bis die Einheit 3 vollständig leer gefahren ist, sich also keine Flaschen 2 mehr in dieser Einheit befinden.

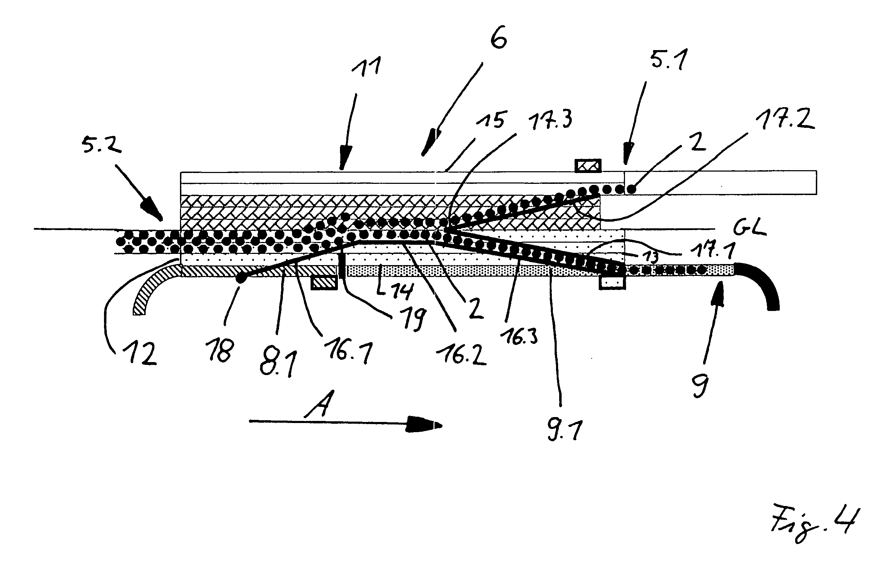

Die Figur 4 zeigt den Zustand der Übergabestation beim Wiederanlaufen der Etikettiermaschine 4 z.B. nach dem Beheben einer Störung. Durch das Stellglied 19 ist der Abschnitt 16.1 wieder in die Normalstellung bewegt, d.h. der Abschnitt 16.2 schließt sich an den Abschnitt 16.1 an und der Abschnitt 16.1 befindet sich vollständig an der der Längsseite 14 zugewandten Seite der Grenzlinie GL. Über den Transporteur 8 werden beim Wiederanlaufen der Etikettiermaschine 4 zunächst keine Flaschen 2 zugeführt. Die der Transportfläche 11 über den Pufferauslauf 5.2 zugeführten Flaschen 2 gelangen teilweise an die Führung 16 und bilden entlang dieser Führung 16 einen dicht gedrängten Flaschenstrom aus, der dann über den Abschnitt 17.1 an den Transporteur 9 weitergeleitet wird. Diejenigen Flaschen, die in dem dicht gedrängten Flaschenstrom entlang der Führung 16 keinen Platz finden, werden durch seitliches Abdrängen auf den von den Transportbändern 11.4 - 11.8 gebildeten Teil der Transportfläche 11 und durch Führung entlang des Abschnittes 17.2 an den Puffereinlauf 5.1 weitergeleitet und gelangen schließlich erneut über den Auslauf 5.2 an die Transportfläche 11, so dass der Puffer 5 auf diese Weise nach und nach entleert werden kann.

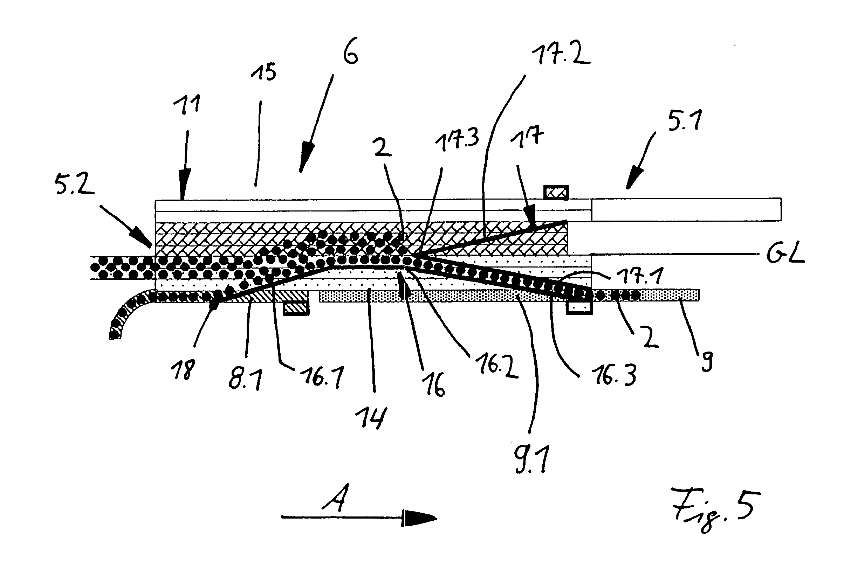

Um Schwankungen der Leistung der Einheit 3 und/oder der Etikettiermaschine 4, beispielsweise bei konstanter Leistung der Einheit 3 unterschiedliche Leistungen der Etikettiermaschine 4 ausgleichen zu können, ist es zweckmäßig, dass ein bestimmter Vorrat an Flaschen 2 im Puffer 5 vorhanden ist. Bei in der Normalstellung befindlichem Abschnitt 16.1 werden entsprechend der Figur 5 die im Puffer 5 befindlichen Flaschen 2 über den Pufferauslauf 5.2 auf die Transportfläche 11 gefördert, und zwar derart, dass sich ein Teil dieser Flaschen in Lücken des über den Transporteur 9 zugeführten und sich entlang der Führung 16 bewegenden Flaschenstroms einreiht, so dass die Flaschen 2 dann zwischen den Abschnitten 16.3 und 17.1 den angestrebten, dicht gedrängten Flaschenstrom bilden, der über den Transporteur 9 der Etikettiermaschine 4 zugeführt wird. Die restlichen Flaschen 2, die keinen Platz im Flaschenstrom finden, werden von diesen Flaschenstrom wiederum seitlich verdrängt, und zwar auf den dem Abschnitt 17.2 zugeordneten Teil der Transportfläche 11 und gelangen dann entlang dieses Abschnitts 17.2 an den Puffereinlauf 5.1.

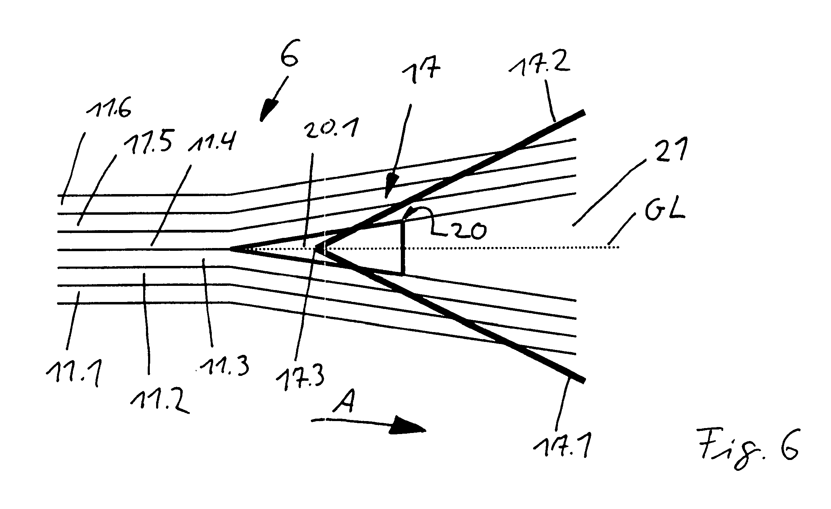

Um das Trennen bzw. Splitten des Flaschenstromes besonders zuverlässig zu erreichen, insbesondere aber auch bei einem störungsfreien Betrieb der Anlage bzw. der Etikettiermaschine 4 zum Auffüllen von Lücken im Flaschenstrom (beispielsweise bei einer erhöhten Leistung der Etikettiermaschine 4) Flaschen 2 aus dem Puffer 5 einzuführen, ohne dass es an der Führung 17 bzw. am dortigen Frontbereich 17.3 zu Störungen im Flaschenstrom kommt, ist es entsprechend der Figur 6 möglich, die Transportbänder 11.1 - 11.8 so auszubilden bzw. zu führen, dass die Transportbänder 11.1 - 11.3 und die Transportbänder 11.4 - 11.8 im Bereich der Führung 17 leicht auseinanderstreben, so dass im Anschlussbereich zwischen den Transportbändern 11.3 und 11.4 eine Lücke bzw. ein Spalt 21 entsteht. Dieser ist durch ein keilförmiges Abdeckblech 20 abgedeckt, welches sich mit einem entgegen der Transportrichtung A spitz zulaufenden Abschnitt 20.1 über dem Spalt 21 erstreckt, und zwar entlang einer Teillänge des Abschnittes 16.2 und in Transportrichtung A vor dem Frontbereich 17.3. Durch die auseinanderstrebenden Transportbänder 11.1 - 11.3 bzw. 11.4 - 11.8 werden diejenigen Flaschen, die sich auf der Transportfläche 11 bereits vor Erreichen des mit den Transportbändern 11.1 - 11.8 nicht mitbewegten Abdeckblechs 20 auf der dem Abschnitt 17.1 und damit dem Transporteur 9 zugeordneten Seite der Grenzlinie GL befinden, sicher an den Transporteur 9 und diejenigen Flaschen, die sich auf der dem Abschnitt 17.2 und damit dem Puffereinlauf 5.1 zugewandten Seite der Grenzlinie GL befinden, zuverlässig und störungsfrei an den Puffereinlauf 5.1 gefördert.

Die Erfindung wurde voranstehend an einem Ausführungsbeispiel beschrieben. Es versteht sich, dass zahlreiche Änderungen sowie Abwandlungen möglich sind, ohne dass dadurch der der Erfindung zugrundeliegende Erfindungsgedanke verlassen wird.

### Bezugszeichenliste

- 1: Transportstrecke
- 2: Flasche
- 3: Einheit
- 4: Etikettiermaschine
- 5: Puffer
- 5.1: Flascheneinlauf des Puffers
- 5.2: Flaschenauslauf des Puffers
- 6: Übergabestation
- 7: Steuerung
- 8, 9, 10: Transporteur
- 8.1,9.1: Transportband
- 10.1, 10.2, 10.3, 10.4: Transportband
- 11: Transportfläche oder Trenntisch
- 11.1 - 11.6: Transportband
- 12, 13: Ende der Transportfläche 11
- 14, 15: Längsseiten der Transportfläche 11
- 16, 17: Führung
- 16.1, 16.2, 16.3: Abschnitt der Führung 16
- 17: Führung
- 17.1, 17.2: Abschnitt der Führung 17
- 17.3: Übergang
- 18: Gelenk
- 19: Stellglied
- 20: Abdeckblech
- 20.1: keilförmig sich verjüngender Abschnitt des Abdeckbleches 20
- 21: Spalt
- A: allgemeine Transportrichtung
- B: Transportrichtung im Puffer 5
- GL: Grenzlinie

## Patentansprüche

1. Transportstrecke (1) mit wenigstens einem Transporteur (8, 9) zum Transportieren von Flaschen (2) oder dergleichen Behälter von einer Behälteraufgabe, die an einem beispielsweise von einem Transporteur (8) gebildeten Behältereinlauf der Transportstrecke (1) vorgesehen ist, an eine Behälterabgabe, die an einem beispielsweise von einem Transporteur (9) gebildeten Behälterauslauf der Transportstrecke (1) vorgesehen ist, mit einem von einem Hilfstransporteur (10) gebildeten Puffer (5) für die Behälter (2) sowie mit einer Übergabestation (6) zur Übergabe der Behälter (2) an dem Puffer (5) sowie zum Weiterleiten von Behältern (2) aus dem Puffer (5) an die Behälterabgabe der Transportstrecke (1), wobei die Übergabestation (6) eine durch wenigstens einen Antrieb in einer Transportrichtung (A) bewegte Transportfläche (11) für die Behälter (2) bildet, und zwar mit wenigstens einem bezogen auf die Transportrichtung (A) vorderen ersten Ende (12), mit einem bezogen auf die Transportrichtung (A) rückwärtigen zweiten Ende (13) sowie mit parallel zur Transportrichtung (A) sich erstreckenden Längsseiten (14, 15), **dadurch gekennzeichnet,**
**dass** der Puffer (5) bzw. der diesen Puffer bildenden Hilfstransporteur (10) mit einem Puffereinlauf (5.1) an das zweite Ende und mit einem Pufferauslauf (5.2) an das erste Ende der Transportfläche (11) derart anschließt, dass der Puffereinlauf (5.1) in einer Achsrichtung senkrecht zur Transportrichtung (A) einen größeren Abstand von einer ersten Längsseite (14) aufweist als der Pufferauslauf (5.2),
**dass** an der Transportfläche (11) mit Abstand von dem ersten Ende (12) ein keilartiges erstes Führungselement (17) mit wenigstens zwei Behälterführungsflächen (17.1, 17.2) vorgesehen ist, von denen sich eine erste Behälteführungsfläche (17.1) in Transportrichtung ausgehend von einem Frontbereich (17.3) an den Behälterauslauf (9) und eine zweite Behälterführungsfläche (17.2) ausgehend von dem Frontbereich (17.3) an einen Puffereinlass (5.1) des Puffers (5) erstreckt,
**dass** der Frontbereich (17.3) auf einer in Transportrichtung (A) verlaufenden, die Transportfläche (11) in einen ersten, den Behälterauslauf (9) zugeordneten und einen zweiten, dem Puffereinlauf (5.1) zugeordneten Teil unterteilt,
**dass** der Behältereinlauf (8) sowie ein Pufferauslauf (5.2) am ersten Abschnitt (11.1 - 11.3) der Transportfläche (11) vorgesehen sind, und
**dass** steuerbare Überschubmittel (16.1) vorgesehen sind, die zwischen einem ersten Zustand, in welchem über den Behältereinlauf (8) und/oder den Pufferauslauf (5.2) zugeführte Behälter (2) auf dem ersten Teil der Förderfläche (11) verbleibend entlang der ersten Behälterführungsfläche (17.1) an dem Behälterauslauf (9) gelangen, und einem zweiten Zustand steuerbar sind, in welchem die über den Behältereinlauf (8) und/oder über den Pufferauslauf (5.2) zugeführten Behälter (2) von dem ersten Teil der Transportfläche (11) auf den dem Puffereinlauf (5.1) zugeordneten zweiten Teil (11.8) geleitet und über diesen dem Puffereinlauf (5.1) zugeführt werden.

2. Transportstrecke nach Anspruch 1, **dadurch gekennzeichnet, dass** die Überschubmittel von einer zweiten Führung oder von einem beweglichen, vorzugsweise von einem schwenkbaren Abschnitt (16.1) der zweiten Führung (16) gebildet sind.

3. Transportstrecke nach Anspruch 1 oder 2, **dadurch gekennzeichnet, dass** die Transportfläche (11) mit ihrem ersten Teil (11.1 - 11.3) im Bereich des ersten Endes (12) an den Behältereinlauf (8) anschließt.

4. Transportstrecke nach Anspruch 3, **dadurch gekennzeichnet, dass** die Transportfläche (11) mit einer ersten Längsseite (14) an den Behältereinlauf (8) anschließt.

5. Transportstrecke nach einem der vorhergehenden Ansprüche, **dadurch gekennzeichnet, dass** der Pufferauslauf (5.1) an das erste Ende der Transportfläche (11) anschließt.

6. Transportstrecke nach einem der vorhergehenden Ansprüche, **dadurch gekennzeichnet, dass** die erste Behälterführungsfläche (17.1) und/oder die zweite Behälterführungsfläche (17.2) schräg zur Transportrichtung (A) verlaufen.

7. Transportstrecke nach einem der vorhergehenden Ansprüche, **dadurch gekennzeichnet, dass** der Behältereinlauf (8) in einem größeren Abstand von der Grenzlinie (GL) in die Transportfläche (11) mündet als der Pufferauslauf (5.2).

8. Transportstrecke nach einem der vorhergehenden Ansprüche, **dadurch gekennzeichnet, dass** die Überschubmittel (16.1) sowohl in dem ersten Zustand als auch in dem zweiten Zustand schräg zur Förderrichtung (A) orientiert sind und mit dieser Förderrichtung in dem ersten Zustand einen kleineren Winkel einschließen als in dem zweiten Zustand.

9. Transportstrecke nach einem der vorhergehenden Ansprüche, **dadurch gekennzeichnet, dass** die Überschubmittel (16.1) von einem ersten Abschnitt der zweiten Führung (16) gebildet sind, die an diesen ersten Abschnitt in Transportrichtung anschließend einen zweiten sowie einen dritten Abschnitt (16.2, 16.3) aufweist, die sich entlang des ersten Teils (11.1 - 11.3) der Transportfläche (11) erstrecken und von denen der zweite Abschnitt (16.2) parallel oder annähernd parallel zur Transportrichtung (A) verläuft und der dritte Abschnitt (16.3) eine bis an dem Behälterauslauf (9) reichende Führung für die Behälter (2) bildet.

10. Transportstrecke nach Anspruch 9, **dadurch gekennzeichnet, dass** der zweite Abschnitt (16.2) der zweiten Führung (16) von der Grenzlinie (GL) senkrecht zur Transportrichtung (A) einen Abstand aufweist, der gleich oder geringfügig größer ist als der Durchmesser der Behälter (2).

11. Transportstrecke nach Anspruch 10, **dadurch gekennzeichnet, dass** der dritte Abschnitt (16.3) parallel oder annähernd parallel zu der ersten Behälterführungsfläche (17.1) verläuft.

12. Transportstrecke nach einem der vorhergehenden Ansprüche, **dadurch gekennzeichnet, dass** der Abstand zwischen dem dritten Abschnitt (16.3) der zweiten Führung (16) und der ersten Behälterführungsfläche (17.1) gleich oder etwas größer ist als der Durchmesser der Behälter (2).

13. Transportstrecke nach einem der vorhergehenden Ansprüche, **dadurch gekennzeichnet, dass** die zweite Führung (16) in Draufsicht auf die Transportfläche (11) einen in etwa trapezartigen Verlauf aufweist.

14. Transportstrecke nach einem der vorhergehenden Ansprüche, **dadurch gekennzeichnet, dass** die Transportfläche (11) der Übergabestation (6) von mehreren, umlaufend angetriebenen Transportbändern (11.1 - 11.8) gebildet ist, die senkrecht zur Transportrichtung aneinander anschließen.

15. Transportstrecke nach einem der vorhergehenden Ansprüche, **dadurch gekennzeichnet, dass** der Behältereinlauf von einem Transporteur (8) mit wenigstens einem Transportband (8.1) gebildet ist, und dass die Transportfläche (11) der Übergabestation (6) mit einer Längsseite (14) an das Transportband (8.1) dieses Transporteurs seitlich anschließt.

16. Transportstrecke nach einem der vorhergehenden Ansprüche, **dadurch gekennzeichnet, dass** der Behälterauslauf von einem Transporteur (9) mit wenigstens einem Transportband (9.1) gebildet ist, und dass dieses Transportband (9.1) an die erste Längsseite (14) der Transportfläche (11) anschließt.

17. Transportstrecke nach einem der vorhergehenden Ansprüche, **dadurch gekennzeichnet, dass** der Behältereinlauf (8) und/oder der Behälterauslauf (9) jeweils für einen einspurigen Behälterstrom ausgebildet sind.

18. Transportstrecke nach einem der vorhergehenden Ansprüche, **dadurch gekennzeichnet, dass** der Puffer (5) bzw. der diesen Puffer bildende Hilfstransporteur (10) für einen einspurigen, vorzugsweise für einen mehrspurigen, beispielsweise zweispurigen Behälterstrom ausgebildet sind.

19. Transportstrecke nach einem der vorhergehenden Ansprüche, **dadurch gekennzeichnet, dass** die die Transportbänder (11.1 - 11.3), die den dem Behälterauslauf (9) zugeordneten Teil der Transportflächen (11) bilden, einerseits und die Transportbänder (11.4 - 11.8), die den dem Puffereinlauf (5.1) zugeordneten Teil der Transportfläche (11) bilden, andererseits vor dem ersten Führungselement (17) quer zur Transportrichtung auseinanderstreben und eine dort zwischen den Transportbändern gebildete Lücke oder ein entsprechender Spalt (21) durch ein Abdeckblech (20) abgedeckt ist.

## Claims

1. Transport section (1) including at least one conveyor (8, 9) for the conveying of bottles (2) or similar containers from a container pick-up, which is provided at a container inlet of the conveying section (1), for example, formed by a conveyor (8), to a container discharge, which is provided at a container outlet of the conveyor section (1), for example formed by a conveyor (9), a buffer (5) for the containers (2) formed by an auxiliary conveyor (10) and a transfer station (6) for transferring the containers (2) to the buffer (5) and for continuing to conduct the containers (2) out of the buffer (5) to the container discharge of the conveyor section (1), wherein the transfer station (6) forms a conveying surface (11) for the containers (2) moved in a conveying direction (A) by at least one driving means, having at least one front first end (12), with reference to the conveying direction (A), one rear second end (13), with reference to the conveying direction (A), and longitudinal sides (14, 15) extending parallel to the conveying direction (A), **characterised in that** the buffer (5) or respectively the auxiliary conveyor (10) forming the said buffer is connected to the second end of the transport surface (11) by a buffer inlet (5.1) and to the first end of the transport surface (11) by a buffer outlet (5.2) in such a manner that, in an axial direction at right angles relative to the conveying direction (A), the buffer inlet (5.1) is at a greater distance from a first longitudinal side (14) than the buffer outlet (5.2),
**in that** a wedge-type first guide element (17) with at least two container guide surfaces (17.1, 17.2) is provided on the conveying surface (11) at a distance from the first end (12), of the said container guide surfaces a first container guide surface (17.1) extends in the conveying direction proceeding from a front a region (17.3) to the container outlet (9) and a second container guide surface (17.2) extends proceeding from the front region (17.3) to a buffer inlet (5.1) of the buffer (5),
**in that** the front region (17.3), on a boundary line extending in the conveying direction (A), divides the conveying surface (11) into a first part that is associated with the container outlet (9) and a second part that is associated with the buffer inlet (5.1),
**in that** the container inlet (8) and the buffer outlet (5.2) are provided at the first portion (11.1 - 11.3) of the conveying surface (11), and
**in that** controllable transferring means (16.1) are provided, which are controllable between a first state, in which containers (2) supplied via the container inlet (8) and/or the buffer outlet (5.2), remaining on the first part of the conveying surface (11), pass along the first container guide surface (17.1) to the container outlet (9), and a second state in which the containers (2) supplied via the container inlet (8) and/or via the buffer outlet (5.2), are guided by the first part of the conveying surface (11) onto the second part (11.8), associated with the buffer inlet (5.1), and are supplied via the same to the buffer inlet (5.1).

2. Conveying section according to claim 1, **characterised in that** the transferring means are formed by a second guide or by a displaceable, preferably pivotal portion (16.1) of the second guide (16).

3. Conveying section according to claim 1 or 2, **characterised in that** the conveying surface (11) connects to the container inlet (8) by means of its first part (11.1 - 11.3) in the region of the first end (12).

4. Conveying section according to claim 3, **characterised in that** the conveying surface (11) connects to the container inlet (8) by means of a first longitudinal side (14).

5. Conveying section according to one of the preceding claims, **characterised in that** the buffer outlet (5.1) connects to the first end of the conveying surface (11).

6. Conveying section according to one of the preceding claims, **characterised in that** the first container guide surface (17.1) and/or the second container guide surface (17.2) extend inclinedly relative to the transport direction (A).

7. Conveying section according to one of the preceding claims, **characterised in that** the container inlet (8) opens into the conveying surface (11) at a greater distance from the boundary line (GL) than the buffer outlet (5.2).

8. Conveying section according to one of the preceding claims, **characterised in that** the transferring means (16.1) are oriented both in the first state and in the second state inclinedly relative to the conveying direction (A) and in the first state are at a smaller angle to the said conveying direction than in the second state.

9. Conveying section according to one of the preceding claims, **characterised in that** the transferring means (16.1) are formed by a first portion of the second guide (16), which has a second and third portion (16.2, 16.3) connecting to the said first portion in the conveying direction and extending along the first part (11.1 - 11. 3) of the conveying surface (11) and from which the second portion (16.2) extends parallel or approximately parallel to the conveying direction (A) and the third portion (16.3) forms a guide for the containers (2) extending as far as the container outlet (9).

10. Conveying section according to claim 9, **characterised in that** the second portion (16.2) of the second guide (16) is at a distance from the boundary line (GL), at right angles to the conveying direction (A), that is equal or slightly greater than the diameter of the container (2).

11. Conveying section according to claim 10, **characterised in that** the third portion (16.3) extends parallel or approximately parallel to the first container guide surface (17.1).

12. Conveying section according to one of the preceding claims, **characterised in that** the distance between the third portion (16.3) of the second guide (16) and the first container guide surface (17.1) is equal or somewhat greater than the diameter of the container (2).

13. Conveying section according to one of the preceding claims, **characterised in that** the second guide (16), when seen in top view onto the conveying surface (11), has an approximately trapeze-like development.

14. Conveying section according to one of the preceding claims, **characterised in that** the conveying surface (11) of the transfer station (6) is formed by a plurality of rotationally driven conveyor belts (11.1 - 11. 8), which connect to each other at right angles to the conveying direction.

15. Conveying section according to one of the preceding claims, **characterised in that** the container inlet is formed by a conveyor (8) with at least one conveyor belt (8.1), and **in that** the conveying surface (11) of the transfer station (6) connects to the conveying belt (8.1) of the said conveyor by means of a longitudinal side (14).

16. Conveying section according to one of the preceding claims, **characterised in that** the container outlet is formed by a conveyor (9) with at least one conveyor belt (9.1), and **in that** the said conveyor belt (9.1) connects to the first longitudinal side (14) of the conveying surface (11).

17. Conveying section according to one of the preceding claims, **characterised in that** the container inlet (8) and/or the container outlet (9) are each configured for a single-track container flow.

18. Conveying section according to one of the preceding claims, **characterised in that** the buffer (5) or respectively the auxiliary conveyor (10) forming the said buffer are configured for a single-track, preferably for a multi-track, for example a two-track container flow.

19. Conveying section according to one of the preceding claims, **characterised in that** the conveyor belts (11.1 - 11.3), which form the part of the conveying surfaces (11) associated with the container outlet (9), on the one hand, and the conveyor belts (11.4 - 11. 8), which form the part of the conveying surface (11) associated with the buffer inlet (5.1), on the other hand, diverge upstream of the first guide element (17) transversely relative to the conveying direction and a gap formed there between the conveyor belts or a corresponding opening (21) is covered by a cover plate (20).

## Revendications

**1.** Trajet de transport (1) avec au moins un transporteur (8, 9) pour transporter des bouteilles (2) ou des récipients analogues depuis une alimentation de récipients, qui est prévue au niveau d'une arrivée de récipients du trajet de transport (1) formée par exemple par un transporteur (8), vers une délivrance de récipients qui est prévue sur une sortie de récipients du trajet de transport (1) formée par exemple par un transporteur (9), avec un tampon (5) formé par un transporteur auxiliaire (10) pour les récipients (2) ainsi qu'avec un poste de transfert (6) pour transférer les récipients (2) au niveau du tampon (5) ainsi que pour transférer des récipients (2) depuis le tampon (5) vers la délivrance de récipients du trajet de transport (1), le poste de transfert (6) formant pour les récipients (2) une surface de transport (11) déplacée par au moins un entraînement dans une direction de transport (A), avec au moins une première extrémité (12) antérieure par rapport à la direction de transport (A), avec une deuxième extrémité (13) postérieure par rapport à la direction de transport (A) et avec des côtés longitudinaux (14, 15) s'étendant parallèlement à la direction de transport (A), **caractérisé en ce que**
le tampon (5) resp. le transporteur auxiliaire (10) formant ce tampon se raccorde avec une entrée de tampon (5.1) à la deuxième extrémité et avec une sortie de tampon (5.2) à la première extrémité de la surface de transport (11), de telle manière que l'entrée de tampon (5.1) présente, dans une direction axiale perpendiculaire à la direction de transport (A), une distance depuis un premier côté longitudinal (14) plus grande que la sortie de tampon (5.2),
**en ce que** sur la surface de transport (11) est prévu, à distance de la première extrémité (12), un premier élément de guidage (17) en forme de cale avec au moins deux surfaces de guidage de récipient (17.1, 17.2), dont une première surface de guidage de récipient (17.1) s'étend dans la direction de transport en partant d'une zone frontale (17.3) sur la sortie de récipients (9) et une deuxième surface de guidage de récipients (17.2) s'étend en partant de la zone frontale (17.3) au niveau d'une entrée de tampon (5.1) du tampon (5),
**en ce que** la zone frontale (17.3) est divisée en une première partie s'étendant dans la direction de transport (A) et associée à la sortie de récipients (9) et une deuxième partie associée à l'entrée de récipients (5.1), et
**en ce que** des moyens de poussée (16.1) commandables sont prévus, qui peuvent être commandés entre un premier état, dans lequel des récipients (2) introduits par l'arrivée de récipients (8) et/ou la sortie de tampon (5.2) arrivent le long de la première surface de guidage de récipients (17.1) au niveau de la sortie de récipients (9) en restant sur la première partie de la surface de transport (11), et un deuxième état dans lequel les récipients (2) introduits par l'arrivée de récipients (8) et/ou la sortie de tampon (5.2) sont dirigés de la première partie de la surface de transport (11) vers la deuxième partie (11.8) associée à l'entrée de tampon (5.1) et, depuis celle-ci, sont envoyés à l'entrée de tampon (5.1).

**2.** Trajet de transport selon la revendication 1, **caractérisé en ce que** les moyens de poussée sont formés par un deuxième guidage ou par une section (16.1) mobile, de préférence pivotante, du deuxième guidage (16).

**3.** Trajet de transport selon la revendication 1 ou 2, **caractérisé en ce que** la surface de transport (11) se raccorde avec sa première partie (11.1-11.3) au niveau de la première extrémité (12) sur l'arrivée de récipients (8).

**4.** Trajet de transport selon la revendication 3, **caractérisé en ce que** la surface de transport (11) se raccorde avec un premier côté longitudinal (14) sur l'arrivée de récipients (8).

**5.** Trajet de transport selon l'une des revendications précédentes, **caractérisé en ce que** la sortie de tampon (5.1) se raccorde à la première extrémité de la surface de transport (11).

**6.** Trajet de transport selon l'une des revendications précédentes, **caractérisé en ce que** la première surface (17.1) de guidage de récipients et/ou la deuxième surface (17.2) de guidage de récipients s'étendent à l'oblique par rapport à la direction de transport (A).

**7.** Trajet de transport selon l'une des revendications précédentes, **caractérisé en ce que** l'arrivée de récipients (8) débouche dans la surface de transport (11) à une plus grande distance de la ligne limite (GL) que la sortie de tampon (5.2).

**9.** Trajet de transport selon l'une des revendications précédentes, **caractérisé en ce que** les moyens de poussée (16.1) sont formés par une première section du deuxième guidage (16) qui, à la suite de cette première section dans la direction de transport, présente une deuxième et une troisième sections (16.2, 16.3) qui s'étendent le long de la première partie (11.1-11.3) de la surface de transport (11) et dont la deuxième section (16.2) s'étend parallèlement ou approximativement parallèlement à la direction de transport (A) et la troisième section (16.3) forme pour les récipients (2) un guidage allant jusqu'à la sortie de récipients (9).

**10.** Trajet de transport selon la revendication 9, **caractérisé en ce que** la deuxième section (16.2) du deuxième guidage (16) présente depuis la ligne limite (GL), perpendiculairement à la direction de transport (A), une distance qui est égale ou légèrement supérieure au diamètre des récipients (2).

**11.** Trajet de transport selon la revendication 10, **caractérisé en ce que** la troisième section (16.3) s'étend parallèlement ou approximativement parallèlement à la première surface de guidage de récipients (17.1).

**12.** Trajet de transport selon l'une des revendications précédentes, **caractérisé en ce que** la distance entre la troisième section (16.3) du deuxième guidage (16) et la première surface de guidage de récipients (17.1) est égale ou un peu supérieure au diamètre des récipients (2).

**13.** Trajet de transport selon l'une des revendications précédentes, **caractérisé en ce que** le deuxième guidage (16) présente en vue de dessus de la surface de transport (11) un profil approximativement trapézoïdal.

**14.** Trajet de transport selon l'une des revendications précédentes, **caractérisé en ce que** la surface de transport (11) du poste de transfert (6) est formée par plusieurs tapis de transport (11.1-11.8) entraînés en circulation, qui se raccordent les uns aux autres perpendiculairement à la direction de transport.

**15.** Trajet de transport selon l'une des revendications précédentes, **caractérisé en ce que** l'arrivée de récipients est formée par un transporteur (8) avec au moins un tapis de transport (8.1), et **en ce que** la surface de transport (11) du poste de transfert (6) se raccorde avec un côté longitudinal (14) au tapis de transport (8.1) de ce transporteur.

**16.** Trajet de transport selon l'une des revendications précédentes, **caractérisé en ce que** la sortie de récipients est formée par un transporteur (9) ayant au moins un tapis de transport (9.1), et **en ce que** ce tapis de transport (9.1) se raccorde au premier côté longitudinal (14) de la surface de transport (14).

**17.** Trajet de transport selon l'une des revendications précédentes, **caractérisé en ce que** l'arrivée de récipients (8) et/ou la sortie de récipients (9) sont conformées chacune pour un flux de récipients sur une seule file.

**18.** Trajet de transport selon l'une des revendications précédentes, **caractérisé en ce que** le tampon (5) resp. le transporteur auxiliaire (10) formant ce tampon sont conformés pour un flux de récipients sur une seule file, de préférence sur plusieurs files, par exemple sur deux files.

**19.** Trajet de transport selon l'une des revendications précédentes, **caractérisé en ce que** les tapis de transport (11.1-11.3) qui forment la partie des surfaces de transport (11) associées à la sortie de récipients (9) d'une part et les tapis de transport (11.4-11.8) qui forment la partie des surfaces de transport (11) associées à l'entrée de tampon (5.1) d'autre part s'écartent transversalement à la direction de transport avant le premier élément de guidage (17), et une lacune qui s'y forme entre les tapis de transport ou une fente correspondante (21) est recouverte par une tôle de recouvrement (20).
